# EUROPEAN PATENT APPLICATION

(11) **EP 1 276 066 A2**
(43) Date of publication of application: **15.01.2003**
(21) Application number: 02015265.8
(22) Date of filing: 09.07.2002
(51) Int. Cl.: G06F 17/60

(54) **Licensing method and license providing system**

(30) Priority: 10.07.2001 JP 2001209841; 15.04.2002 JP 2002111827
(71) Applicant: Systemneeds Inc., Tokyo 105-0012 (JP)
(72) Inventor: Nakayama, Keisuke, 105-0012 Tokyo (JP)
(74) Representative: Liesegang, Eva

(57) **Abstract**

The present invention provides a licensing method and a license providing system which can easily perform licensing and payment with improved security. The present invention is authenticated by authenticating his fingerprint using a user authentication module (1), a result of which authentication is decided by an authentication service station server (5) using a public key which corresponds to an identifier of this user authentication module (1), which module is then provided with license information so that the license information of an apparatus mounted with this module (1) may be referenced and also that based on the identifier of the module, a product number, and information of a payment information a payment method employed at the payment agency may be specified to help support payment.

## Description

### BACKGROUND OF THE INVENTION

### Field of the Invention

The present invention relates to a method for licensing over a network such as the internet and, more particularly to a licensing method and a license providing system which can perform licensing and payment easily while improving security.

### Description of the Related Art

The following will describe a conventional licensing method employed when a license product is purchased.
First, how to download a chargeable gate or application (hereinafter called a program) from a Web site and use it is described. To download a chargeable program, for example, typically one can download the target program from a Web site to be notified of a password from a licenser on condition that he should pay a charge and enter the password to utilize the program.

To download a chargeable music file, he can also download it on condition that he should pay a charge.
The programs or the music files are generally prevented from being copied.

By this conventional licensing method, however, although the access is limited by utilization of a password, if the password is known by someone else when a license product is copied illegally, the product can be easily used illegally; to prevent illegal use, on the other hand, a complicated copy preventing mechanism is necessary, thus giving rise to a problem that a simple and high-security system cannot be constituted.

Furthermore, the conventional licensing method requires, for its implementation, license for each personal computer or any other apparatus in which a license product is downloaded, so that he who wishes to buy a new apparatus must buy the license product twice, which imposes a burden on him.

### SUMMARY OF THE INVENTION

It is an object of the present invention to provide a licensing method and a license providing system which can authenticate an owner of license to thereby authorize legal utilization and provide one-dimensional management of the license pieces in a user authentication module and also which can easily perform licensing and payment with improved security.

The present invention provides a licensing method employed at an authentication service station server, comprising the steps of:
receiving an identifier of a user authentication module and such a product number of a license product, an authentication result, and information of a payment agency as having been encrypted with a secret key which corresponds to the identifier;
decrypting these various information items using a public key which corresponds to the identifier;
causing the payment agency to perform payment processing which accords with the decrypted information of the payment agency to then receive a payment result and also obtain license information which accords with the decrypted product number; and
encrypting the payment result and the license information with the public key to then transmit them to the user authentication module,
by which the secret key and the public key that correspond to the identifier of the user authentication module are used to transmit and receive the information necessary for licensing and payment, thus making it possible to implement a configuration easily while improving security.

The present invention provides a license providing system for providing license for purchasing of a license product, the system being provided with an apparatus authentication database storing a public key which corresponds to an identifier of a user authentication module, a product database storing license information which corresponds to the license product, and a payment database prescribing a payment agency and a payment method which correspond to payment agency information and also having an authentication service station server, the authentication service station server:
receiving the identifier of the user authentication module and such a product number of the license product, an authentication result, and the payment agency information as having been encrypted with a secret key which corresponds to said identifier;
referencing said apparatus authentication database to obtain a public key which corresponds to the identifier;
decrypting the various information items with the public key;
referencing the payment database to then cause payment processing to be performed by the payment agency and the payment method which correspond to the decrypted payment agency information in order to receive a payment result;
referencing the product database to obtain the license information which corresponds to the decrypted product number; and
encrypting with the public key and then transmitting to the user authentication module the payment result and the license information,
by which the secret key and the public key that correspond to the identifier of the user authentication module are used to transmit and receive the information necessary for licensing and payment, thus making it possible to implement a configuration easily while improving security.

### BRIEF DESCRIPTION OF THE DRAWINGS

FIG. 1 is a diagram for showing a configuration of a license providing system related to an embodiment of the present invention;

FIG. 2 is an illustration for explaining a database structure of a license bank;

FIG. 3 is a flowchart for showing processing at a license seller server 4;

FIG. 4 is a flowchart for showing processing at a user authentication module 1; and

FIG. 5 is a flowchart for showing processing at an authentication service station server 5.

### <Description of Reference Numerals>

1:User authentication module, 2:Cellular phone, 3:PC, 4:License seller server, 5:Authentication service station server, 6:Database, 7:Payment agency server, 8:Carrier processor

### DESCRIPTION OF THE PREFERRED EMBODIMENTS

The following will describe embodiments of the present invention with reference to the drawings.
By a licensing method and a license providing system related to an embodiment of the present invention, one is authenticated by authenticating his fingerprint using a user authentication module, a result of which authentication is decided by an authentication service station server using a public key which corresponds to an identifier of this user authentication module, which module is then provided with license information so that the license information of an apparatus mounted with this module may be referenced and also that based on the identifier of the module, a product number, and information of a payment information a payment method employed at the payment agency may be specified to help support payment. It is thus possible to improve security for license and payment and also to implement a mechanism for this purpose easily.

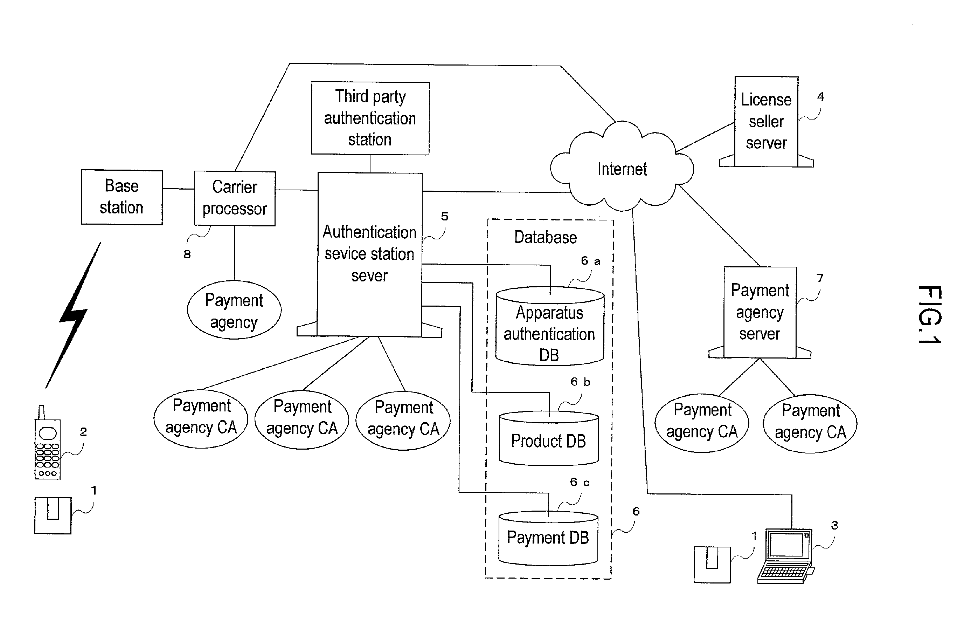

A license providing system for implementing a licensing method related to the present embodiment of the present invention is outlined with reference to FIG. 1. FIG. 1 is a block diagram for showing a configuration of the license providing system related to the present embodiment of the present invention.
The license providing system (the present system) for implementing the licensing method related to the present embodiment comprises, as shown in FIG. 1, a user authentication module 1, a cellular phone 2, a personal computer (PC) 3, a license seller server 4, an authentication service station server 5, a database 6, a payment agency server 7, and a carrier processor 8.

These components of the present system are specifically described as follows.
The user authentication module (IAU: Intelligent Authentication Unit) 1 is capable of authenticating a fingerprint and any other organisms, specifically being comprised of a fingerprint sensor which picks up a fingerprint of a user and a fingerprint collation section which collates thus picked up fingerprint with his fingerprint stored beforehand.

As the user authentication module is there available a fingerprint authentication device of our company, in which an IC card section registers and stores fingerprint data of a plurality of fingers of each person, a collation control section compares and collates fingerprint data input through its fingerprint sensor section with thus registered fingerprint data corresponding to a degree of security of an application at a required collation level, if he is authenticated, a common control section obtains from an FACCT (File Access Control Condition Table) a key necessary to access a file which stores data to be output corresponding to contents of the application, and an IC card CPU decrypts the key with an encryption key stored in a MF (Master File) to thereby authorize access to the file by use of thus decrypted key so that data in the file may be output to the application.

Furthermore, the user authentication module 1 stores an identifier (IAU identifier) and a secret key which are inherent to itself and comprises a memory section for storing license information and also a control section for controlling the module as a whole.
Furthermore, the user authentication module 1 is provided with an external interface section for connecting to the cellular phone 3 or the PC3.

Before the user authentication module 1 is distributed, an IAU identifier, a secret key, file access information, and a security certificate number are written at an authentication service station, which issues them.
Furthermore, the user authentication module 1 is distributed to a bank, a credit company, a security company, a cellular phone company etc., under the control of which a user's fingerprint is registered and, if necessary, his password etc. is set.
If the user has a transaction account already, he may in some cases register his fingerprint or organism information by distributing a scratch card in which is entered a plurality of passwords to control the activation of a program for registering of the fingerprint.

The cellular phone 2 and the PC3, provided with the user authentication module 1, are connected to the Internet to purchase a license product so that it may be used. The license product may come in a program or a music file, for example. Note here that the cellular phone 2 or the PC3 may be replaced by a PHS or PDA (personal information terminal) as far as it can be connected to the Internet.

The license seller server 4 operates at a Web site over the Internet in such a manner as to request for authentication of a user in order to provide a license product so that it can be downloaded and also provides license information to the user authentication module 1 through the cellular phone 2 or the PC3. Note here that the user authentication module 1 stores the license information in its internal memory section.

The authentication service station server 5 provides license information in response to a request from the license seller server 4.
The authentication service station server 5 receives an IAU identifier, a user authentication result, and payment agency information from the license seller server 4 to then support payment at the payment agency server 7.

To the authentication service station server 5 are connected an apparatus authentication database (apparatus authentication DB) 6a which manages IAU identifiers, a product database (product DB) 6b which manages product numbers, and a payment database (payment DB) 6c which manages information about payment agencies, so that the server 5 helps processing at the payment agency server 7 based on the information items stored in these DBs.

The apparatus authentication DB6a stores a public key which corresponds to each IAU identifier.
The product DB6b stores such information of products to be downloaded as, specifically, product names registered beforehand by a trader at the license seller server 4, license types, license information, etc. These license types may include first a license type with a valid term, second a license type with a valid number of times, third a license type with a service time, fourth a license type with an indefinite term, and a license type with a serial number added to each product.
The payment DB6c stores a payment agency, a payment method, etc. in correspondence to each piece of the payment agency information.

The specific processing performed at the authentication service station server 5 is described as follows: when having received an IAU identifier, a product number, a user authentication result, and payment agency information from the license seller server 4, the authentication service station server 5 uses thus received IAU identifier to retrieve the apparatus authentication DB6a, thus obtaining a public key which corresponds to this IAU identifier. Note here that the product number, the user authentication result, and the payment agency information have been encrypted by the user authentication module 1 using a secret key so that these information items thus encrypted with the secret key may be decrypted with this public key obtained from the apparatus authentication DB6a.

The authentication service station server 5 uses this obtained public key to decrypt the other received information such as the user authentication result etc.
If the user is not authenticated as a result of decryption of the user authentication result, the server 5 rejects providing of the license information without performing payment processing.
As a result of decryption of the product number, it can know a name of a product to be licensed and a license type to obtain the corresponding license information from the product DB6b.
As a result of decryption of the payment agency information, it can know a payment agency and a payment method to obtain a route to the payment agency from the payment DB6c.

Then, the authentication service station server 5 receives from the payment agency server 7 a notification of a payment result given at the payment agency, decrypts the payment result and the license information using the public key, and transmits thus encrypted payment result information and the license information to the license seller server 4.
Further, when having decrypted the payment agency information, the authentication service station server 5 selectively performs, if requested, one of two authentication processes: alternative authentication for entrusting authentication to an existing third party authentication agency (third party authentication station) and composite authentication for entrusting authentication both to an existing third party authentication agency and this server in a composite manner.

The payment agency server 7 performs payment processing using a payment agency and a payment method which are specified in the processing by the authentication service station server 5 and then posts a payment result to the authentication service station server 5.
Note here that to the payment agency server 7 is connected a plurality of payment agencies (CAs), so that the payment processing is performed at a specific one of these payment agencies based on the information of this agency etc.
Alternatively, the payment agencies may be directly connected to the authentication service station server 5 in configuration.

The carrier processor 8 is controlled by a carrier of the cellular phone 2 and provided with a payment agency dedicated for the carrier, so that payment can be made at this dedicated payment agency when the carrier processor 8 is connected to the authentication service station server 5 through a dedicated line for authentication as required.

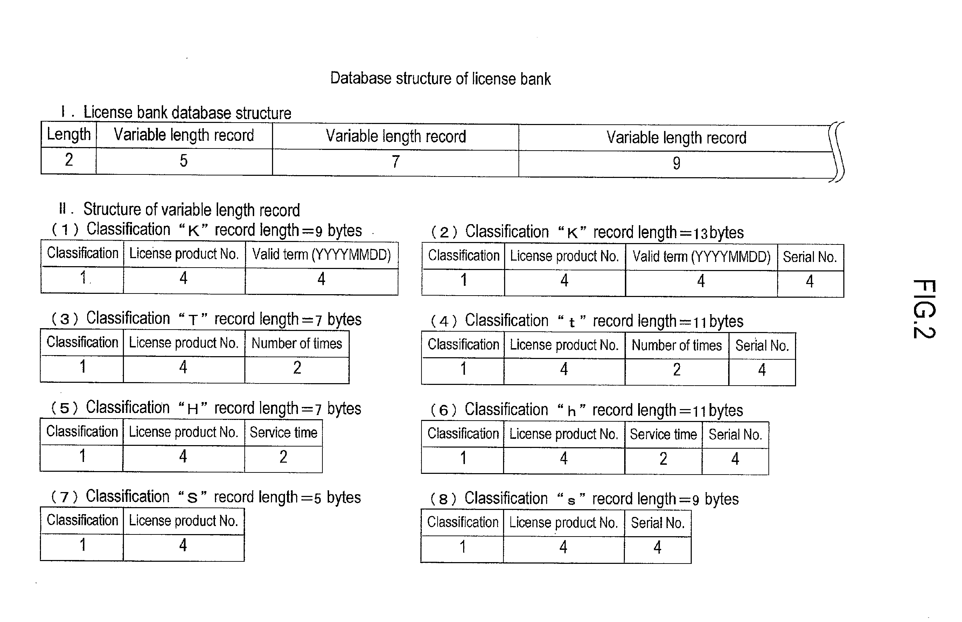

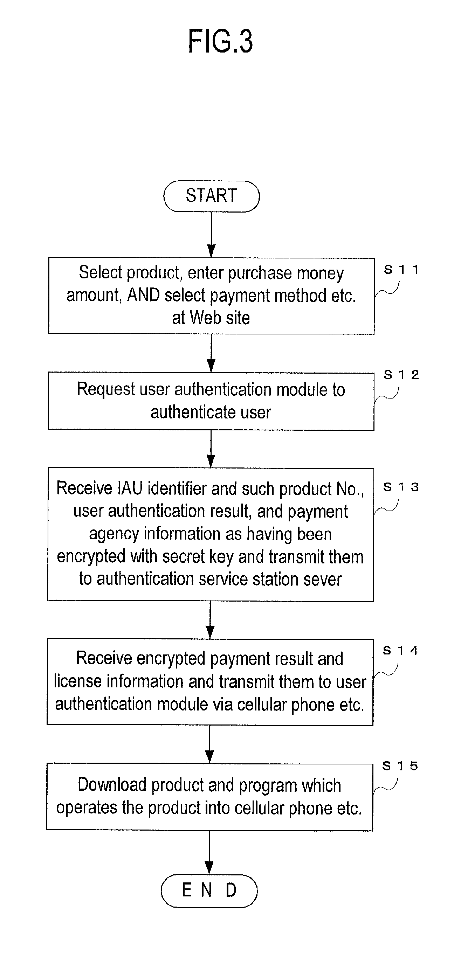

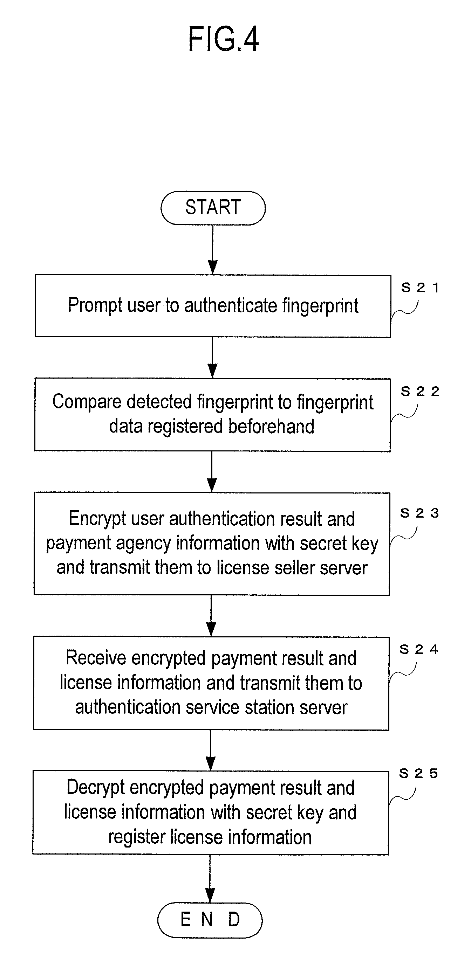

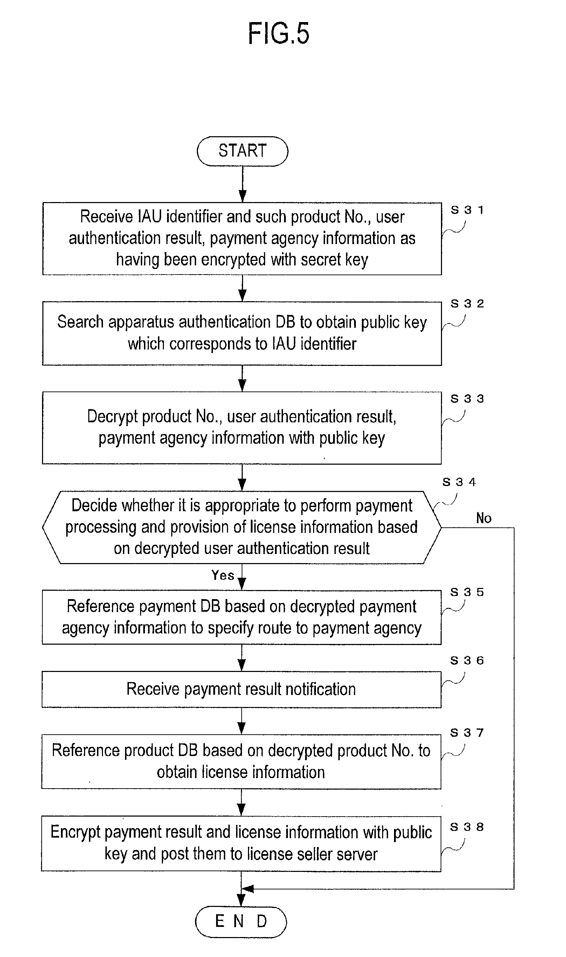

The following will describe a flow of processing on a licensing method and a payment method related to the embodiment of the present invention with reference to FIGS. 1-5. FIG. 2 is an illustration for explaining a database structure of a license bank, FIG. 3 is a flowchart for showing processing at the license seller server 4, FIG. 4 is a flowchart for showing processing at the user authentication module 1, and FIG. 5 is a flowchart for showing processing at the authentication service station server 5.

First, in the user authentication module 1 before being distributed are already registered and stored an IAU identifier, a fingerprint for authentication of a user, etc.
Furthermore, the license seller server 4 registers licensing-subject products and specifies product names, license types, etc. at the authentication service station server 5 beforehand. Based on this specification, the authentication service station server 5 determines a license product number.

A database structure of the license information written in the user authentication module 1 is shown in FIG. 2-I.
In the license bank database structure, a data length is described, which is followed by a variable length record.
A structure of the variable length record, which provides the license information, is comprised of "classification" and "license product No." as well as an addition of "valid term", "number of times" or no attributes (infinite term service) depending on a data type and further a "serial No." as shown in FIGS. 2-II(1) through FIG. 2-II(8).
Being added the serial number, the authentication service station server 5 can manage the license situation easily.

When a user of the cellular phone 2 or the PC3 purchases a licensing-subject product, he uses the cellular phone 2 or the PC3 to connect to the Internet and access a Web site of the license seller server 4, thus selecting a product he will purchase.
At this Web site, as shown in FIG. 3, besides selecting the product, he enters a money amount for purchasing and selects a payment method etc. (S11).
After entering of these items, the license seller server 4 requests through the cellular phone 2 or the PC3 the user authentication module 1 to authenticate him (S12).

When requested for user authentication, as shown in FIG. 4, the user authentication module 1 prompts the user to authenticate his fingerprint (S21) and compares detected fingerprint to fingerprint data registered beforehand to thereby authenticate him (S22). It then encrypts a user authentication result and payment agency information with a secret key stored therein and transmits them to the license seller server 4 (S23).
In user authentication, instead of using only the fingerprint, a face type, an iris, a voice, etc. may be used in organism authentication in a standalone or composite manner.

The license seller server 4 receives the IAU identifier and the product number, user authentication result, payment agency information which are encrypted with the secret key and transmits these information items to the authentication service station server 5 (S24).

AS shown in FIG. 5, the authentication service station server 5 receives the IAU identifier and the product number, user authentication result, payment agency information which are encrypted with the secret key (S31) and searches the apparatus authentication DB6b for the received IAU identifier and product number, user authentication result, and payment agency information encrypted with the secret key to thereby obtain a public key which corresponds to the IAU identifier (s32) and uses this public key to decrypt the product number, the user authentication result, and the payment agency information (S33).

Further, the authentication service station server 5 decides whether payment processing and addition of the license information are appropriate based on thus decrypted user authentication result (S34) and, if the user is not authenticated (in the case of NO), performs neither of the payment processing and the addition of the license information and, if the user is authenticated (in the case of YES), goes on with the payment processing etc.

If the user is authenticated (in the case of YES), the authentication service station server 5 references the payment DB6c based on the decrypted payment agency information to specify a route to the payment agency (S35). When payment processing at the specified payment agency is performed, the authentication service station server 5 is notified of a payment result (S36).
Furthermore, the authentication service station server 5 references the product DB6b based on the decrypted product number to obtain the license information (S37).
Then, the authentication service station server 5 encrypts the payment result and the license information with the obtained public key and posts them to the license seller server 4 (S38).

When having received the encrypted payment result and license information, the license seller server 4 transmits them through the cellular phone 2 etc. to the user authentication module 1 (S14) and also downloads into the cellular phone 2 etc. a product and a program necessary to operate the product (S15).

The user authentication module 1 decrypts the encrypted payment result and license information with the secret key and registers the license information (S25).
Note here that the program necessary to operate the product has a function to confirm the license information registered when the product is utilized and also, depending on a license type, checks a valid term, a valid number of times, and a service time thereof.

Further, this program has different functions with different contents of the license program, so that when a music file, a picture image file, a program, etc. is purchased, once the user is authenticated first, the program may permit the product to be used only by confirming the license information.

Further, the above-mentioned program may be used in such a system for charging for each utilization as an ASP (Application Service Provider), to authenticate the user each time he uses the system, thus utilizing the product.

Furthermore, the above-mentioned program may be such that as in electronic voting (voting right), once the user is authenticated, then the license information is erased.

Furthermore, when a music file is heard or a program is used on a trial basis, no money is paid for it, so that rather than providing the license information, by downloading a license product and a program which operates the product beforehand so that the program may manages a valid number of using times and a valid term to thereby disable utilization of the product if the valid number of using times or the valid term expires.

Since the present system provides the license information to the user authentication module 1 only for a user who has paid a charge based on an IAU identifier in the user authentication module 1 and a result of his authentication by use of his fingerprint etc. carried out by the user authentication module 1, license can be obtained easily and, moreover, the user is authenticated using his fingerprint etc., so that the information is distributed to a regular owner of the license, thus making it possible to improve the security.

Since the present system stores an IAU identifier, a user's fingerprint data, and license information in the user authentication module 1, even when the model of the cellular phone 2 is changed or even if switch-over is made from the cellular phone 2 to the PC3, only one user authentication module 1 can advantageously manage and utilize a plurality of license products because it is provided with the license information.

Furthermore, in the present system, a secret key registered in the user authentication module 1 is used to encrypt a user authentication result, a product number, payment agency information, which are then decrypted by the authentication service station server 5 using a public key which corresponds to the IAU identifier, while a payment result and license information are encrypted by the authentication service station server 5 using the public key and then decrypted by the user authentication module 1 using the secret key for transfer of the information, so that there is no risk that important information may leak during a course of the transfer, thus improving the security.

The present invention provides a licensing method employed at the authentication service station server, comprising the steps of: receiving an identifier of the user authentication module, a product number of a license product encrypted with a secret key which corresponds to this identifier, an authentication result, and payment agency information; decrypting these information items with a public key which corresponds to the identifier; causing the payment agency to perform payment processing which accords with thus decrypted payment agency information, to receive a payment result and also obtain license information which accords with the decrypted product number ; encrypting the payment result and the license information with the public key to then transmit them to the user authentication module, by which the secret key and the public key which correspond to the identifier of the user authentication module are used to transmit and receive the information necessary for licensing and payment, so that it is possible to authenticate a user of license, thus giving an effect of simply implementing a configuration while improving security in the provision and distribution of the license.
Although license has been provided for each apparatus such as a personal computer (PC) conventionally, the present invention makes it possible to distribute license for each owner to provide one-dimensional management of the license information at the user authentication module, thus giving an effect of providing the owner with a high level of convenience.
Further, since the user authentication module is attachable/detachable, advantageously it needs only to be mounted to a cellular phone, a PC, etc. to be used without re-registering of the license therebetween.

The present invention provides a license providing system for providing license for purchasing of a license product, having an authentication service station server being provided with an apparatus authentication database storing a public key which corresponds to an identifier of a user authentication module, a product database storing license information which corresponds to a license product, and a payment database prescribing a payment agency and a payment method which correspond to payment agency information, for receiving the identifier of the user authentication module, a product number of the license product encrypted with a secret key which corresponds to this identifier, an authentication result, and the payment agency information, referencing the apparatus authentication database to obtain the public key which corresponds to the identifier, decrypting these information items with this public key, referencing the payment database to cause payment processing to be performed by a payment agency and a payment method which correspond to the decrypted payment agency information in order to receive a payment result, referencing the product database to obtain license information which corresponds to the decrypted product number, and encrypting the payment result and the license information with the public key to then transmit them to the user authentication module, by which the secret key and the public key which correspond to the identifier of the user authentication module are used to transmit and receive the information necessary for licensing and payment, thus giving an effect of enabling implementing a configuration easily while improving security.
Further, the present invention provides license to the user authentication module and so gives an effect of enabling a license product to be used at a plurality of apparatuses for each user instead of permitting only a regular license user to use each licensed product when it is downloaded.

## Claims

1. A licensing method employed at an authentication service station server, comprising the steps of:
receiving an identifier of a user authentication module and such a product number of a license product, an authentication result, and payment agency information as having been encrypted with a secret key which corresponds to said identifier;
decrypting said information items with a public key which corresponds to said identifier;
causing a payment agency to perform payment processing which accords with said decrypted payment agency information to then receive a payment result;
obtaining license information which accords with said decrypted product number; and
encrypting with said public key and then transmitting to said user authentication module said payment result and said license information.

2. The licensing method employed at a license seller server according to claim 1, comprising the steps of:
requesting user authentication when a license product is selected, a purchase money amount is entered, and a payment method is selected through an apparatus mounted with the user authentication module;
when the authentication result of the user authentication performed by said user authentication module and information of the payment agency information and the product number which are encrypted with the secret key and the identifier of said user authentication module are received from said apparatus, transmitting said information and said identifier to said authentication service station server; and
transmitting to said apparatus the payment result and the license information which are encrypted with the public key received from said authentication service station server.

3. The licensing method employed at the user authentication module according to claim 2, comprising the steps of:
performing user authentication in response to a request for the user authentication sent from the license seller server;
encrypting, and then transmitting from the apparatus mounted to said license seller server, the authentication result of said user authentication, the payment agency information, and the product number of the license product using the secret key which corresponds to the identifier inherent to said module;
receiving at and inputting to said apparatus the payment result and the license information which are encrypted by the authentication service station server using the public key and which are sent from said license seller server; and
decrypting said payment result and said license information with said secret key to then register said license information.

4. The licensing method according to any of claims 1 to 3, wherein a specific payment method employed at the authentication service station server is stored at a specific payment agency in correspondence to the decrypted payment agency, so that shift is made to said specific payment agency to perform the payment processing by use of said specific payment method.

5. A license providing system for providing license for purchasing of a license product, said system being provided with an apparatus authentication database storing a public key which corresponds to an identifier of a user authentication module, a product database storing license information which corresponds to the license product, and a payment database prescribing a payment agency and a payment method which correspond to payment agency information and also having an authentication service station server, said authentication service station server:
receiving the identifier of the user authentication module and such a product number of the license product, an authentication result, and the payment agency information as having been encrypted with a secret key which corresponds to said identifier;
referencing said apparatus authentication database to obtain a public key which corresponds to said identifier;
decrypting said various information items with said public key;
referencing said payment database to then cause payment processing to be performed by the payment agency and the payment method which correspond to said decrypted payment agency information in order to receive a payment result;
referencing said product database to obtain the license information which corresponds to said decrypted product number; and
encrypting with said public key and then transmitting to said user authentication module said payment result and said license information.

6. The license providing system according to claim 5, wherein the authentication service station server performs either one of alternative authentication for causing a third party authentication station and composite authentication for combining authentication by said server and authentication by the third part station, based on contents of the payment agency information.

7. The license providing system according to claim 5, wherein the authentication service station server is provided with, in addition to the license product number, a valid term, a valid number of times, and a service time depending on a license type and so is used at the user authentication module to confirm the valid term, the valid number of times, and the service time when the license product is used.

8. The license providing system according to claim 5 or 7, wherein the authentication service station server is provided with a serial number in addition to the license information, for managing a license situation of the license product.

9. The license providing system according to claim 5 or 7, comprising a license seller server for receiving the payment result and the license information which are encrypted with the public key from the authentication service station server to then transmit said encrypted payment result and license information to the user authentication module via the apparatus mounted with said user authentication module and also enabling downloading a program which permits the license product and said license product to be utilized.

10. The license providing system according to claim 9, wherein at the license seller server, said program permitting the license product to be utilized checks the valid term, the valid number of times, and the service time depending on the license type.

11. The license providing system according to claim 5, wherein as the user authentication module is used an IC card for authenticating an owner using a password or a memory medium capable of user authentication.
